# EUROPEAN PATENT APPLICATION

(11) **EP 2 749 928 A1**
(43) Date of publication of application: **02.07.2014**
(21) Application number: 12827956.9
(22) Date of filing: 23.08.2012
(51) Int. Cl.: G02B 23/26, F21S 2/00, F21V 8/00, F21Y 101/02

(54) **LIGHT SOURCE DEVICE**

(30) Priority: 26.08.2011 JP 2011184529
(71) Applicant: Olympus Corporation, Shibuya-ku Tokyo 151-0072 (JP)
(72) Inventor: NISHIO, Masahiro, Tokyo 192-8512 (JP); ITO, Takeshi, Tokyo 192-8512 (JP); YAMAMOTO, Eiji, Tokyo 192-8512 (JP)
(74) Representative: Winter, Brandl, Fürniss, Hübner, Röss, Kaiser, Polte - Partnerschaft
(86) International application number: PCT/JP2012/071346
(87) International publication number: WO 2013/031653

(57) **Abstract**

In a light source device including a light source unit (2) including primary light sources (5a to 5c, 6a to 6c, and 7a to 7c), an illumination unit (3) including light converting members (11a to 11c, 12a to 12c, and 13a to 13c) which convert primary light emitted from the primary light sources to secondary light and emits the secondary light to the outside, and a connection portion (4) which removably connects the light source unit and the illumination unit, the connection portion includes a first light port (17) to a tenth light port (26) configured to transfer and receive energy between the light source unit and the illumination unit, and the first to tenth light ports are grouped into two first hierarchical port groups (a first group (27A) and a second group (27B)) by physical properties of the energy to be transferred and received by the ports.

## Description

### Technical Field

The present invention relates to a light source device which emits illumination light.

### Background Art

A prior art of a light source device which emits illumination light is described in, for example, USP 7,433,115. The light source device according to USP 7,433,115 is a combination of multiple kinds of light emitting units. Each of the light emitting units includes a laser light source, a light guide including an optical fiber, and a wavelength converting member. More specifically, a first light emitting unit has a blue laser light source provided at the proximal end portion of a light guide including an optical fiber, and a wavelength converting member provided at the distal end portion of the light guide. The first light emitting unit is configured to guide laser light emitted from the blue laser light source to the distal end of the light guide, and convert the wavelength in the wavelength converting member at the distal end of the light guide. Further, a laser light source of a wavelength shorter than that of blue, a light guide, and a wavelength converting member are used to constitute a second light emitting unit. The first light emitting unit is combined with the second light emitting unit to constitute the light source device, so that higher rendering properties are obtained than when the first light emitting unit alone is used.

Recently, in connection with light source devices for use in observation with, for example, endoscopes, efforts have been made to improve the visibility of an observation target by properly selecting the brightness, peak wavelength, luminescent color, i.e., spectral shape, emission angle, and irradiation pattern shape of illumination light in accordance with the purpose of the observation.

In the light source device according to USP 7,433,115, it is necessary to prepare different kinds of light emitting units in a body of the light source device, and adjust the combination of the light emitting units to be used in accordance with the purpose of use, in order to obtain illumination light suited to the purpose of use. However, preparing a large number of light emitting units in the body of the light source device is not preferable in light of costs and a storage place.

### Summary of Invention

The present invention has been made in view of the foregoing points, and an object of the invention is to provide a light source device capable of emitting various kinds of illumination light suited to the purpose of use.

According to an aspect of the invention, there is provided a light source device including: a light source unit including a primary light source; an illumination unit including a light converting member which converts primary light emitted from the primary light source to secondary light and emits the secondary light to the outside; and a connection portion which removably connects the light source unit and the illumination unit,
characterized in that the connection portion includes multiple ports configured to transfer and receive energy between the light source unit and the illumination unit, and
the multiple ports are grouped into multiple first hierarchical port groups by physical properties of the energy to be transferred and received by the ports.

According to the present invention, it is possible to provide a light source device capable of emitting various kinds of illumination light suited to the purpose of use.

### Brief Description of Drawings

FIG. 1 is a schematic diagram showing the general configuration of a light source device according to a first embodiment of the present invention;
FIG. 2 is a schematic configuration diagram of essential parts showing the arrangement of ports of a connection portion between a light source unit and an illumination unit of the light source device according to the first embodiment;
FIG. 3 is a front view of a distal end face of a unit body of the illumination unit of the light source device according to the first embodiment;
FIG. 4 is a front view showing the arrangement of the ports in a connector of the connection portion of the light source device according to the first embodiment;
FIG. 5 is a front view showing the arrangement of ports in a connector of a connection portion of a light source device according to a second embodiment of the present invention;
FIG. 6 is a schematic configuration diagram of essential parts showing the arrangement of ports of a connection portion between a light source unit and an illumination unit of a light source device according to a third embodiment of the present invention;
FIG. 7 is a front view showing the arrangement of the ports in a connector of the connection portion of the light source device according to the third embodiment;
FIG. 8 is a front view showing the arrangement of ports in a connector of a connection portion of a light source device according to a fourth embodiment of the present invention;
FIG. 9 is a schematic configuration diagram of essential parts showing the arrangement of ports of a connection portion between a light source unit and an illumination unit of a light source device according to a fifth embodiment of the present invention;
FIG. 10 is a front view showing the arrangement of the ports in a connector of the connection portion of the light source device according to the fifth embodiment;
FIG. 11 is a schematic configuration diagram of essential parts showing the arrangement of ports of a connection portion between a light source unit and an illumination unit in a first modification of the light source device according to the first embodiment;
FIG. 12 is a schematic configuration diagram of essential parts showing the connection of fitting portions of a connector of the connection portion between the light source unit and the illumination unit in the light source device according to the first modification;
FIG. 13 is a front view of a distal end face of a unit body of the illumination unit in the light source device according to the first modification;
FIG. 14 is a front view showing the arrangement of ports in a connector of a connection portion in a second modification of the light source device according to the first embodiment;
FIG. 15 is a schematic configuration diagram of essential parts showing the arrangement of ports of a connection portion between a light source unit and an illumination unit in a third modification of the light source device according to the first embodiment;
FIG. 16 is a front view of a distal end face of a unit body of the illumination unit in the light source device according to the third modification; and
FIG. 17 is a perspective view showing a connector of a connection portion of a light source device of a fourth modification of the light source device according to the first embodiment.

### Description of Embodiments

### [First Embodiment]

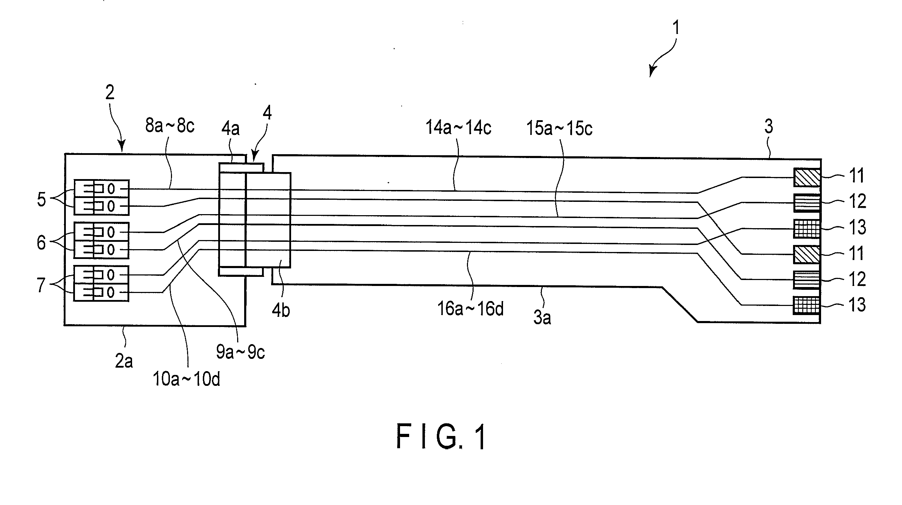

A first embodiment of the present invention is described with reference to FIG. 1 to FIG. 4. It is to be noted that in these drawings, hatching is shown to make distinctions but not to represent sections or represent colors as specified in the United States drawing rules. This holds true with other drawings for other embodiments described later.

A light source device according to the present first embodiment is a combination of multiple primary light sources which generate primary light such as laser light, and multiple light converting members which convert at least one of the peak wavelength, spectral shape, and emission angle of the primary light to emit the light as illumination light (secondary light). More specifically, as shown in FIG. 1, a light source device 1 according to the present embodiment includes a light source unit 2 including multiple laser light sources as primary light sources, and an illumination unit 3 including multiple light converting members. The light source unit 2 and the illumination unit 3 are configured to be removable via a connection portion 4.

The connection portion 4 has multiple light ports which optically connect the light source unit 2 and the illumination unit 3. The light converting members different in at least one of conversion functions to convert the peak wavelength, spectral shape, and emission angle of the primary light are respectively connected to light ports on the side of the illumination unit 3. Similarly, the primary light sources different in at least one of emitted light functions such as the maximum light output, peak wavelength, and spectral shape of the primary light are respectively connected to light ports on the side of the light source unit 2.

The illumination unit 3 equipped with the light converting members is properly selected and combined with the primary light sources mounted on the light source unit 2, so that light characteristics of the illumination light (secondary light) emitted from the light source device 1 can be switched. By properly selecting this combination, it is possible to obtain the light source device 1 in which the light source unit 2 capable of emitting various light can be disposed with high space efficiency.

Thus, in the light source device 1 which can switch various light by properly combining the light source unit 2 with the illumination unit 3, the connection portion 4 which simultaneously connects the light ports is provided so that a connection operation can be easily performed. In this case, the structure of the connection portion 4 can be arranged as will be described in the following embodiments to avoid unintended connection and ensure operation.

### <Light Source Unit>

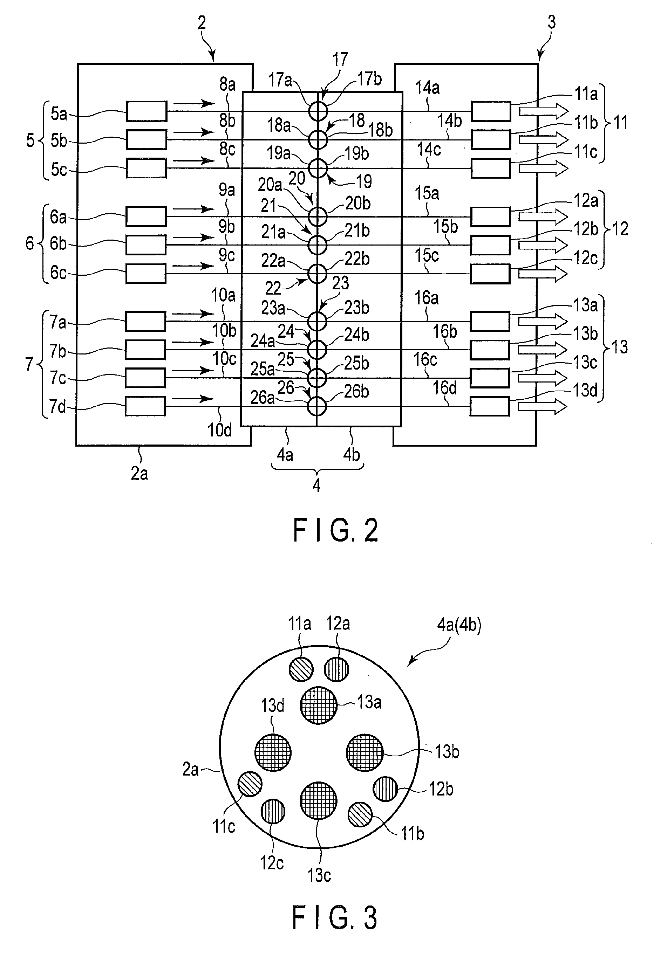

As shown in FIG. 2, in the light source unit 2, three kinds of primary light source groups (a first primary light source group 5, a second primary light source group 6, and a third primary light source group 7) different in emitted light functions are mounted in a unit body 2a. Moreover, each of the three kinds of primary light source groups is equipped with multiple primary light sources. In the present embodiment, the total number of primary light sources mounted in the unit body 2a of the light source unit 2 is ten.

Here, the first primary light source group 5 is equipped with multiple, three in the present embodiment, first primary light sources 5a, 5b, and 5c, as shown in FIG. 2. These three first primary light sources 5a, 5b, and 5c are laser light sources which emit laser light having a peak wavelength λ1 which is a first wavelength.

The second primary light source group 6 is equipped with multiple, three in the present embodiment, second primary light sources 6a, 6b, and 6c. These three second primary light sources 6a, 6b, and 6c are laser light sources which emit laser light having a peak wavelength λ2 which is a second wavelength.

The third primary light source group 7 is equipped with multiple, four in the present embodiment, third primary light sources 7a, 7b, 7c, and 7d. These four third primary light sources 7a, 7b, 7c, and 7d are LED light sources which emit non-laser light having a peak wavelength λ3 which is a third wavelength.

One end of each of first optical fibers 8a, 8b, and 8c is connected to each of the three first primary light sources 5a, 5b, and 5c of the first primary light source group 5. Similarly, one end of each of second optical fibers 9a, 9b, and 9c is connected to each of the three second primary light sources 6a, 6b, and 6c of the second primary light source group 6, and one end of each of third optical fibers 10a, 10b, 10c, and 10d is connected to each of the four third primary light sources 7a, 7b, 7c, and 7d of the third primary light source group 7.

### <Illumination Unit>

The illumination unit 3 has, for example, a circular-pipe-shaped unit body 3a as shown in FIG. 1. As shown in FIG. 2, the illumination unit 3 is equipped with three kinds of light converting member groups (a first light converting member group 11, a second light converting member group 12, and a third light converting member group 13) different in conversion functions. Each of the three kinds of light converting member groups is provided with multiple light converting members. In the present embodiment, the total number of light converting members mounted in the illumination unit 3 is ten.

The first light converting member group 11 has three light converting members (first light converting members 11a, 11b, and 11c) which receive primary light having the first wavelength λ1 and then convert the light to illumination light (secondary light). That is, the illumination unit 3 is equipped with the same number of first light converting members as the number of the first primary light sources mounted in the light source unit 2. The first light converting members 11a, 11b, and 11c have a function to receive laser light of primary light, expand the divergence angle of the primary light, and then emit the primary light as safe secondary light. The first light converting members 11a, 11b, and 11c also have a function to reduce the coherence of the laser light and prevent speckling. These functions will hereinafter be referred to as laser light adaptation functions.

The second light converting member group 12 has three light converting members (second light converting members 12a, 12b, and 12c) which receive primary light having the second wavelength λ2 and then convert the light to illumination light (secondary light). That is, the illumination unit 3 is equipped with the same number of second light converting members as the number of the second primary light sources mounted in the light source unit 2. Similarly to the first light converting members 11a, 11b, and 11c, the second light converting members 12a, 12b, and 12c have a function to receive laser light of primary light, expand the divergence angle of the primary light, and then emit the primary light as safe secondary light. The second light converting members 12a, 12b, and 12c also have a function to reduce the coherence of the laser light and prevent speckling. However, the characteristics of the functions are different from those of the first light converting members 11a, 11b, and 11c. The second light converting members 12a, 12b, and 12c have the laser light adaptation functions.

The third light converting member group 13 has four light converting members (third light converting members 13a, 13b, 13c, and 13d) which receive primary light (LED light) having the third wavelength λ3 and then convert the light to illumination light. That is, the illumination unit 3 is equipped with the same number of third light converting members as the number of the third primary light sources mounted in the light source unit 2. The third light converting members 13a, 13b, 13c, and 13d have a function to receive primary light of non-laser light, convert the primary light to secondary light having desired optical characteristics, for example, by expanding the divergence angle of the primary light and using a diaphragm to adjust the primary light to a proper light intensity, and emit the secondary light. The third light converting members 13a, 13b, 13c, and 13d are designed and produced to convert the LED light which is the non-laser light. Therefore, the third light converting members 13a, 13b, 13c, and 13d do not have the laser light adaptation functions.

Thus, the light emitted by the respective light converting members (the first light converting members 11a to 11c, the second light converting members 12a to 12c, and the third light converting members 13a to 13d) of the three first light converting member groups (the first light converting member group 11, the second light converting member group 12, and the third light converting member group 13) have characteristics varying according to the light converting member groups.

As shown in FIG. 3, the four third light converting members 13a to 13d are equally spaced in four vertical and horizontal directions in FIG. 3 inside the distal end face of the unit body 3a of the illumination unit 3. The three first light converting members 11a to 11c and the second light converting members 12a to 12c are circumferentially equally spaced outside the four third light converting members 13a to 13d. As a result, the four third light converting members 13a to 13d, the three first light converting members 11a to 11c, and the three second light converting members 12a to 12c are scattered. The light emitted by the four third light converting members 13a to 13d, the three first light converting members 11a to 11c, and the three second light converting members 12a to 12c are emitted from the distal end face of the unit body 3a of the illumination unit 3.

As shown in FIG. 1 and FIG. 2, one end of each of first optical fibers 14a, 14b, and 14c is connected to each of the first light converting members 11a to 11c. Similarly, one end of each of second optical fibers 15a, 15b, and 15c is connected to each of the second light converting members 12a to 12c, and one end of each of third optical fibers 16a, 16b, 16c, and 16d is connected to each of the third light converting members 13a to 13d.

### <Connection Portion>

As shown in FIG. 1, the connection portion 4 includes a first connector portion 4a which is a light source unit side connector, and a second connector portion 4b which is an illumination unit side connector. The first connector portion 4a and the second connector portion 4b are removably connected to each other.

The connection portion 4 further has multiple, ten in the present embodiment as shown in FIG. 2, light ports (a first light port 17 to a tenth light port 26) which can transfer and receive energy between the light source unit 2 and the illumination unit 3. Here, the first connector portion 4a and the second connector portion 4b have light ports of removable connection terminals respectively corresponding to the ten light ports (the first light port 17 to the tenth light port 26). That is, the first connector portion 4a has a first light port 17a to a tenth light port 26a, and the second connector portion 4b has a first light port 17b to a tenth light port 26b.

The other ends of the first optical fibers 8a, 8b, and 8c are respectively connected to the first light port 17a, the second light port 18a, and the third light port 19a of the first connector portion 4a. Similarly, the other ends of the second optical fibers 9a, 9b, and 9c are respectively connected to the fourth light port 20a, the fifth light port 21a, and the sixth light port 22a, and the other ends of the third optical fibers 10a, 10b, 10c, and 10d are respectively connected to the seventh light port 23a, the eighth light port 24a, the ninth light port 25a, and the tenth light port 26a. The light ports 17a to 26a on the side of the light source unit 2 may be formed by the other ends of the optical fibers each having one end optically connected to the primary light source.

The other ends of the first optical fibers 14a, 14b, and 14c are respectively connected to the first light port 17b, the second light port 18b, and the third light port 19b of the second connector portion 4b of the connection portion 4. Similarly, the other ends of the second optical fibers 15a, 15b, and 15c are respectively connected to the fourth light port 20b, the fifth light port 21b, and the sixth light port 22b, and the other ends of the third optical fibers 16a, 16b, 16c, and 16d are respectively connected to the seventh light port 23b, the eighth light port 24b, the ninth light port 25b, and the tenth light port 26b. The light ports 17b to 26b on the side of the illumination unit 3 may be formed by the other ends of the optical fibers each having one end optically connected to the light converting member.

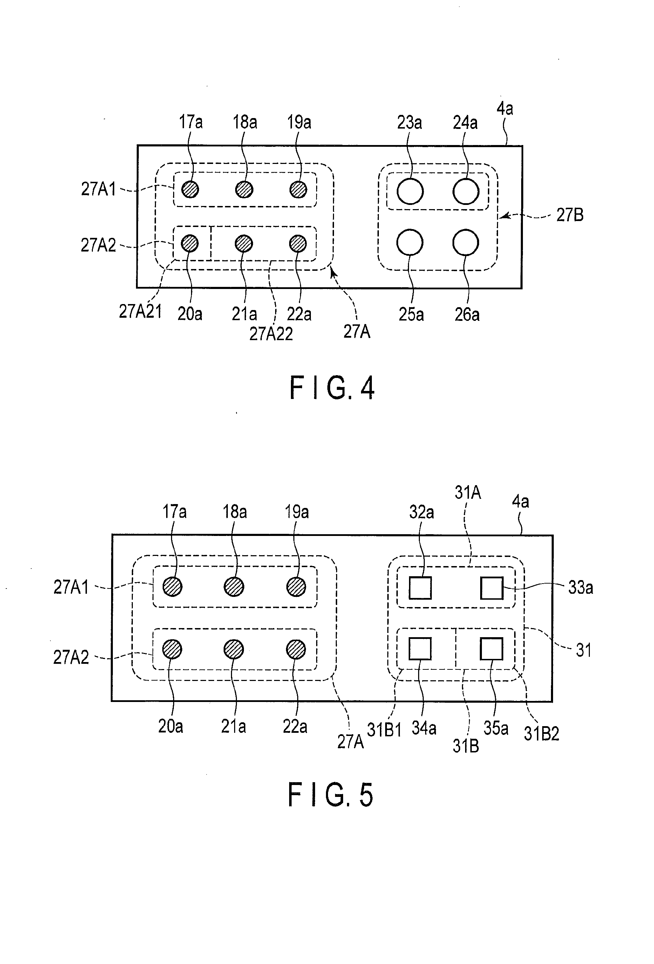

The first light port 17 to the tenth light port 26 described above are grouped into multiple, two in the present embodiment, first hierarchical port groups (a first group 27A and a second group 27B) by physical properties of the energy to be transferred and received by each port (see FIG. 4).

Here, the first group 27A includes the first light port 17 to the sixth light port 22 which are ports to transmit laser light. The second group 27B includes the seventh light port 23 to the tenth light port 26 which are ports to transmit non-laser light. That is, a first hierarchical layer is grouped into a laser light port group (the first group 27A) and a non-laser light port group (the second group 27B).

The first group 27A is further grouped into an A-group 27A1 of the ports (the first light port 17 to the third light port 19) of the laser light having the wavelength λ1, and a B-group 27A2 of the ports (the fourth light port 20 to the sixth light port 22) of the laser light having the wavelength λ2. That is, a second hierarchical layer is grouped into the A-group 27A1 and the B-group 27A2 by the wavelengths of laser light.

FIG. 4 is a diagram in which the connection surface of the first connector portion 4a of the connection portion 4 on the side of the light source unit 2 is viewed from the side of the illumination unit 3 to show the arrangement of the ports of the connection surface in the first connector portion 4a of the connection portion 4. Here, the light ports belonging to the same group are collectively mounted in closely located regions on the connection surface of the first connector portion 4a of the connection portion 4. The ports on the connection surface of the second connector portion 4b are also arranged to correspond to the arrangement of the ports on the connection surface of the first connector portion 4a.

When the first connector portion 4a and the second connector portion 4b of the connection portion 4 are connected, the first light port 17a to the tenth light port 26a of the first connector portion 4a are connected to the first light port 17b to the tenth light port 26b of the second connector portion 4b. In this case, the connection portion 4 has a function to guide the light ports of the first connector portion 4a on the side of the light source unit 2 and the light ports of the second connector portion 4b on the side of the illumination unit 3 to an optically connectable position and fix these light ports.

Now, the operation of the above configuration is described. When the light source device 1 according to the present embodiment is used, the first connector portion 4a of the light source unit 2 is connected to the second connector portion 4b of the illumination unit 3. When the light source unit 2 is connected to the illumination unit 3, the first light port 17a to the tenth light port 26a of the first connector portion 4a are connected to the first light port 17b to the tenth light port 26b of the second connector portion 4b as shown in FIG. 2.

At the same time, the laser light having the peak wavelength λ1 which is the first wavelength emitted from the first primary light sources 5a, 5b, and 5c of the light source unit 2 are guided from the first optical fibers 8a, 8b, and 8c to the first light port 17b, the second light port 18b, and the third light port 19b of the second connector portion 4b via the first light port 17a, the second light port 18a, and the third light port 19a of the first connector portion 4a (of the A-group 27A1 of the first group 27A of the first hierarchical port group). The laser light are then brought into the first light converting members 11a to 11c (of the first light converting member group 11) via the first optical fibers 14a, 14b, and 14c. Thus, the first light converting members 11a, 11b, and 11c of the first light converting member group 11 receive the primary light having the first wavelength λ1, expand the divergence angle of the primary light, convert the primary light to illumination light as safe secondary light, and then emit the secondary light to the outside.

Furthermore, the laser light having the peak wavelength λ2 which is the second wavelength emitted from the second primary light sources 6a, 6b, and 6c of the light source unit 2 are guided from the second optical fibers 9a, 9b, and 9c to the fourth light port 20b, the fifth light port 21b, and the sixth light port 22b of the second connector portion 4b via the fourth light port 20 to the sixth light port 22 of the first connector portion 4a (of the B-group 27A2 of the first group 27A of the first hierarchical port group). The laser light are then brought into the second light converting members 12a to 12c (of the second light converting member group 12) via the second optical fibers 15a, 15b, and 15c. Thus, the second light converting members 12a, 12, and 12c of the second light converting member group 12 receive the primary light having the second wavelength λ2, expand the divergence angle of the primary light, convert the primary light to illumination light as safe secondary light, and then emit the secondary light to the outside.

The LED light (non-laser light) having the peak wavelength λ3 which is the third wavelength emitted from the third primary light sources 7a, 7b, 7c, and 7d of the light source unit 2 are guided from the third optical fibers 10a, 10b, 10c, and 10d to the seventh light port 23b, the eighth light port 24b, the ninth light port 25b, and the tenth light port 26b of the second connector portion 4b via the seventh light port 23a, the eighth light port 24a, the ninth light port 25a, and the tenth light port 26a of the first connector portion 4a (of the second group 27B of the first hierarchical port group). The LED light are then brought into the third light converting members 13a to 13d (of the third light converting member group 13) via the third optical fibers 16a, 16b, 16c, and 16d. Thus, the third light converting members 13a to 13d of the third light converting member group 13 receive the primary light of the non-laser light, expand the divergence angle of the primary light, use the diaphragm to adjust the primary light to a proper light intensity, convert the primary light to secondary light having desired optical characteristics, and then emit the secondary light.

Accordingly, the configuration described above has the following advantageous effects. That is, in the light source device 1 according to the present embodiment, the connection portion 4 is grouped into the laser light port group (the first group 27A) and the non-laser light port group (the second group 27B) as the first hierarchical layer, and the ports belonging to the same group are collectively mounted in the closely located regions. Therefore, necessary countermeasures can be taken only for the group that requires the countermeasures, for example, the safety of the laser light is assured only for the first group 27A of the connection portion 4, and the configuration of the group that does not require any countermeasures, for example, of the second group 27B can be simpler than that of the first group 27A.

Furthermore, since the grouped light ports are collectively located in the connection portion 4, it is easy to visually judge which light port belongs to which group. Countermeasures necessary for the respective groups are easily taken collectively for all the groups.

For example, in order to avoid a phenomenon in which unnecessary laser light is emitted from the first connector portion 4a of the connection portion 4 on the side of the light source unit 2 while the illumination unit 3 is not connected to the light source unit 2, it is preferable to dispose a shutter or the like in the first connector portion 4a of the connection portion 4. In this case, since the first light port 17 to the sixth light port 22 belonging to the first group 27A which is the port group of the laser light are closely located, one shutter can be set collectively for these light ports.

The laser light port group (the first group 27A) is further grouped into the A-group 27A1 and the B-group 27A2 as the second hierarchical layer by the wavelengths of the laser light. Thus, when it is not necessary to take the same countermeasures for all the light ports belonging to the first group 27A of the first hierarchical layer, the second hierarchical port group should be used to take countermeasures for one of the A-group 27A1 and the B-group 27A2. For example, although the grouping in the first hierarchical layer is based on whether light is laser light, the same countermeasures may not be always necessary for all the laser light. Moreover, for example, ultraviolet laser causes light deterioration if there is a general resin component in the vicinity of a port, so that it may be necessary to take countermeasures for the ultraviolet laser different from those for visible or infrared laser by, for example, using a highly light-resistant resin or inorganic substance. In this case, it is possible to take necessary countermeasures only for the necessary light port by grouping the light ports as the second hierarchical layer according to the wavelengths of the lasers.

The connection efficiency of the connection port of the laser light deteriorates if the position adjustment precision of the connection portion 4 is low. Therefore, a connection portion with a high position adjustment precision is needed, but the light port is thin and small-sized. On the other hand, the port of the non-laser light does not require high position adjustment precision, but is generally larger in size than that of the laser light. Therefore, there is a difference in circumferential size and structure between the light port of the laser light and the light port of the non-laser light. In the present embodiment, the light ports are collectively arranged group by group, so that it is easy to have a configuration suited to each port. For example, a metal member is used when precision is required, or a ceramic member is used when heat resistance is required. Thus, design and manufacture are made easier and costs can be reduced by grouping when the material of the connection portion 4 required for each group is different. Further, it is easy to put optical wires in the light source unit 2 and the illumination unit 3 in order by bundling similar optical wires.

For example, when the primary light source of the laser light is wrongly connected to the light converting member which does not have the laser light adaptation functions, there is a possibility that light dangerous to the human body may be emitted to the outside or that light which can cause speckling and which is not suited for illumination light may be emitted to the outside. In contrast, when the light ports are grouped and arranged as in the present embodiment, it is easy to visually judge whether the light port is a port having the laser light adaptation functions, and wrong connection can be prevented.

Thus, when the light source unit 2 and the illumination unit 3 are configured to be removable from each other to obtain one light source device 1 that can emit various light suited to purposes, it is possible to obtain the light source device 1 which optimizes the structure of the connection portion 4 of the light port and which is easy to design and manufacture and which can be reduced in cost.

When the light source unit 2 and the illumination unit 3 are designed, necessary countermeasures can be set for each of the groups of the light ports in the first connector portion 4a and the second connector portion 4b of the connection portion 4. Therefore, when a new light port is provided, the new light port can be only disposed at a port position belonging to a desired group so that countermeasures necessary for this group have already been taken for the new light port as well. Consequently, the light port group to which the new light port belongs is judged from the properties of the light converting member at the time of the designing of the light source unit 2 and the illumination unit 3, and the light port is disposed in the region of the group to which this light converting member belongs. According to this design, it is not necessary to individually consider necessary countermeasures.

### [Second Embodiment]

The present embodiment is a modification in which the configuration of the light source device 1 according to the first embodiment (see FIG. 1 to FIG. 4) is modified as below. In the example of the connection portion 4 shown in the first embodiment, the second group 27B includes the seventh light port 23 to the tenth light port 26 which are the ports to transmit non-laser light. However, in the present embodiment, a second group 31 including an electric port group is provided as shown in FIG. 5. That is, the present embodiment is different from the first embodiment in that two first hierarchical port groups of the connection portion 4 are grouped into the laser light port group (the first group 27A) and the electric port group (second group 31). The laser light port group (the first group 27A) in the present embodiment is similar to that in the first embodiment, and is not described.

As shown in FIG. 5, the electric port group (second group 31) includes electric ports 32a, 33a, 34a, and 35a such as signal terminals for transmitting sensing signals in addition to an electric supply terminal and a ground terminal. The ports on the connection surface of the second connector portion 4b are also arranged to correspond to the arrangement of the ports on the connection surface of the first connector portion 4a. Unshown electric ports 32b, 33b, 34b, and 35b are provided in the electric port group of the second connector portion 4b.

The electric port group (second group 31) includes an unshown light sensor to control various electric functions necessary for the illumination unit 3, for example, the intensity of illumination light, and a connection check terminal to electrically check the connection between the light source unit 2 and the illumination unit 3 in the connection portion 4.

Thus, in the present embodiment, the electric port group (second group 31) of electric wires and the laser light port group (the first group 27A) of optical wires are grouped in the first hierarchical layer, and the electric wires are collectively arranged. Thus, countermeasures necessary for the optical wires (e.g., prevention of deterioration in optical connection efficiency caused by a dirty terminal portion, and safety measures against leaked laser light) can be taken only for the light port group (the first group 27A). Countermeasures necessary for the electric wires (e.g., countermeasures against noise caused by a shield, and electric leakage or electric shock countermeasures against water and dust) can be taken only for the electric port group (second group 31). As a result, necessary countermeasures can be taken only for a necessary group, so that it is possible to obtain a small-sized and low-cost connection portion.

The electric ports are closely arranged so that the wiring lines located in the vicinity of the connection portion are easily put in order when not only integral wires such as flexible wires or ribbon wires but also twisted wires that are generally used for noise countermeasures in which electric wires are woven are used as the electric wires extending from the electric ports.

Thus, when the light source unit 2 and the illumination unit 3 are configured to be removable from each other to obtain one light source device 1 that can emit various light suited to purposes, it is possible to obtain the light source device 1 which optimizes the connection portion 4 even in the structure having the electric wires in the connection portion 4 and which is easy to design and manufacture and which can be reduced in cost.

In the present embodiment described above, the electric wire connected to the signal terminal port among the electric ports 32a, 33a, 34a, and 35a of the electric port group (second group 31) is preferably shielded with a shield wire when a weak signal is used. The flexible wires or the ribbon wires may be used as the electric wires. Therefore, the electric wires are grouped and the electric ports of the connection portion 4 are closely arranged to enable efficient wiring.

Although the electric port group (second group 31) is described as one group in the present embodiment, the present invention is not limited to this. For example, the ports for transmitting digital signals may be separated from the ports for transmitting analog signals, and a digital signal group and an analog signal group may be grouped and arranged as a second hierarchical group lower in hierarchy than the electric port group.

### [Third Embodiment]

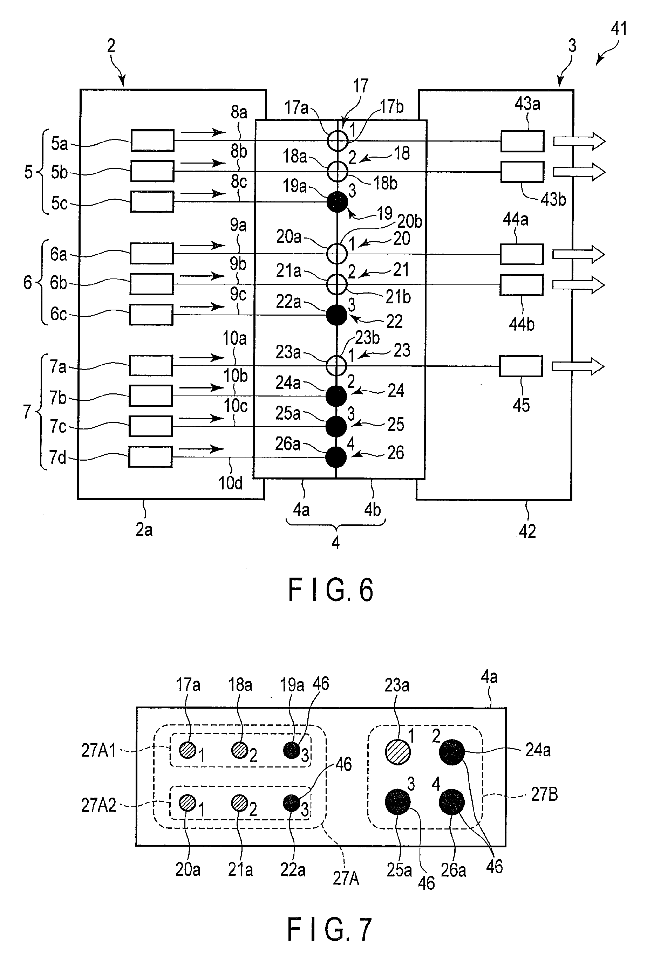

Now, a third embodiment of the present invention is described with reference to FIG. 6 and FIG. 7. The light source device according to the present embodiment is basically similar in configuration to the light source device 1 according to the first embodiment (see FIG. 1 to FIG. 4). The same parts in FIG. 6 and FIG. 7 as the parts in FIG. 1 to FIG. 4 are denoted by the same reference signs, and are not described. The differences are only described here.

The present embodiment is different from the first embodiment in that the number of the ports of the connection portion (first connector portion 4a) on the side of the light source unit 2 is different from the number of the ports of the connection portion (second connector portion 4b) on the side of the illumination unit 3. The light source unit 2 in the present embodiment is similar in configuration to the light source unit 2 in the first embodiment. That is, the light source unit 2 in the present embodiment can also be combined with the illumination unit 3 described in the first embodiment.

A unit body 42 of the illumination unit 3 in the present embodiment is configured to have a smaller number of internal light converting members than in the first embodiment. The unit body 42 of the illumination unit 3 in the present embodiment has two first light converting members 43a and 43b, two second light converting members 44a and 44b, and one third light converting member 45. That is, the light source unit 2 and the illumination unit 3 are optically connected to each other in a total of five light ports (the first light port 17, the second light port 18, the fourth light port 20, the fifth light port 21, and the seventh light port 23) among the ten light ports (the first light port 17 to the tenth light port 26) of the connection portion 4.

The remaining five light ports are configured so that the primary light sources are connected on the side of the light source unit 2 but no light converting members are connected on the side of the illumination unit 3. That is, five light ports are connected to, whereas five light ports are not connected to. The five light ports that are not connected to (the third light port 19, the sixth light port 22, the eighth light port 24, the ninth light port 25, and the tenth light port 26) are blocked from light on the side of the illumination unit 3. Therefore, even if primary light are emitted from the primary light sources connected to the corresponding ports (the third light port 19, the sixth light port 22, the eighth light port 24, the ninth light port 25, and the tenth light port 26), the light are not emitted to the outside of the connection portion 4. For example, light blocking members 46 are provided in these light ports that are not connected to. A high-damping material is preferably disposed as the light blocking members 46.

In FIG. 7 showing the arrangement of the ports on the connection surface in the first connector portion 4a of the connection portion 4, the third light port 19a, the sixth light port 22a, the eighth light port 24a, the ninth light port 25a, and the tenth light port 26a are light ports that are not connected to, and the first light port 17a, the second light port 18a, the fourth light port 20a, the fifth light port 21a, and the seventh light port 23a are light ports that are connected to. The numbers indicated in the vicinity of the light ports in FIG. 6 and FIG. 7 represent the priorities of the port positions in each group. Here, when the number (five in the present embodiment) of the light ports to be mounted is smaller than the number (ten in the present embodiment) of the light ports that can be provided in the connection portion 4, the optical wires are configured to be mounted in descending order of the priorities of the ports in each group. In other words, the light ports lower in priority are configured not to be connected to.

Now, the operation of the above configuration is described. In the light source device 41 according to the present embodiment, a total of five primary light sources (the first primary light source 5c, the second primary light source 6c, and the three third primary light sources 7b, 7c, and 7d) among the ten primary light sources of the light source unit 2 are connected to the ports that are not connected to. Therefore, when the light source unit 2 is operated, these primary light sources (the first primary light source 5c, the second primary light source 6c, and the three third primary light sources 7b, 7c, and 7d) should not generate light.

In the present embodiment, the priorities of the mounting positions of the light ports connected to the light blocking members of the light blocking members are determined. Therefore, if the number of the light ports that are connected to in each group is only known, it is possible to recognize which primary light source of the light source unit 2 should be turned on and which primary light source should not be turned on.

Thus, when the light source unit 2 and the illumination unit 3 are configured to be removable from each other to obtain one light source device 41 that can emit various light suited to purposes, it is possible to obtain the light source device 41 which optimizes the connection portion 4 even in the structure having the ports that are not connected to in the connection portion 4 and which is easy to design and manufacture and which can be reduced in cost.

### [Fourth Embodiment]

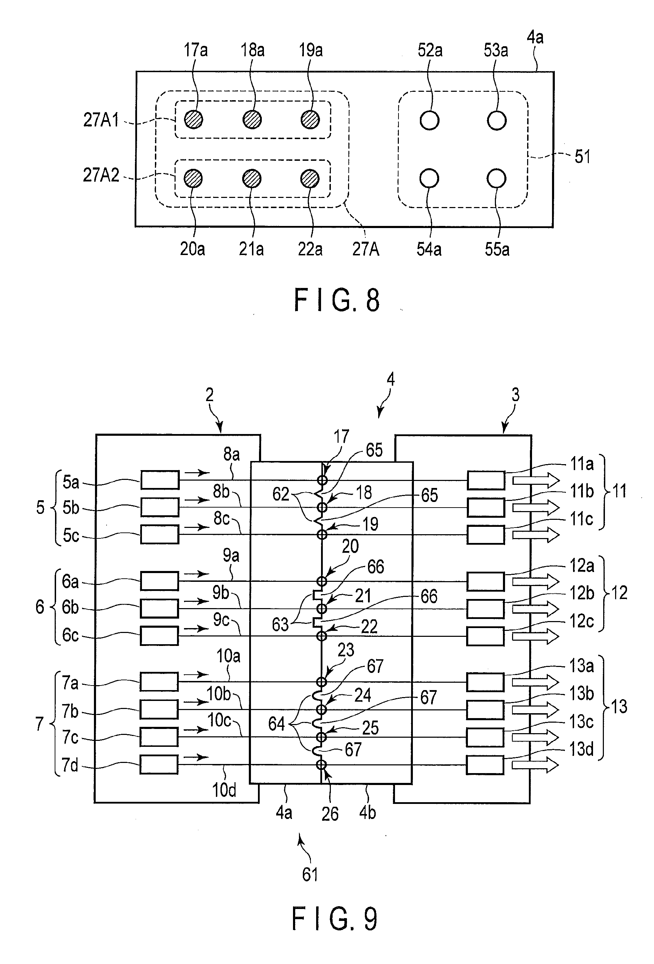

Now, a fourth embodiment of the present invention is described with reference to FIG. 8. The light source device according to the present embodiment is basically similar in configuration to the light source device 1 according to the first embodiment (see FIG. 1 to FIG. 4). The same parts in FIG. 8 as the parts in FIG. 1 to FIG. 4 are denoted by the same reference signs, and are not described. The differences are only described here.

The present embodiment is different from the first to third embodiments in that one of the port groups provided in the connection portion 4 according to the first embodiment, for example, the second group 27B or 31 is a free port group 51 which is not limited in characteristics and function.

Four expansion ports 52a, 53a, 54a, and 55a are provided in the free port group 51. Any terminals can be provided in these expansion ports 52a, 53a, 54a, and 55a. For example, the number of the ports that can be disposed in a laser port group is three in the connection portion, and a fourth light port for laser light is to be disposed. In this case, this light port can be disposed in the free port group 51. Otherwise, a light port which is not scheduled in the connection portion 4, for example, a light port of laser light having the third wavelength λ3 can be disposed in the free port group 51.

It is also possible to provide electric connection portions in the free ports 52a, 53a, 54a, and 55a, or provide non-laser ports.

According to this configuration, it is possible to assure expandability even in the case of functional expansion, for example, even when functions that have not been considered at the time of designing the connection portion 4 are installed in the light source unit 2 and/or the illumination unit 3.

### [Fifth Embodiment]

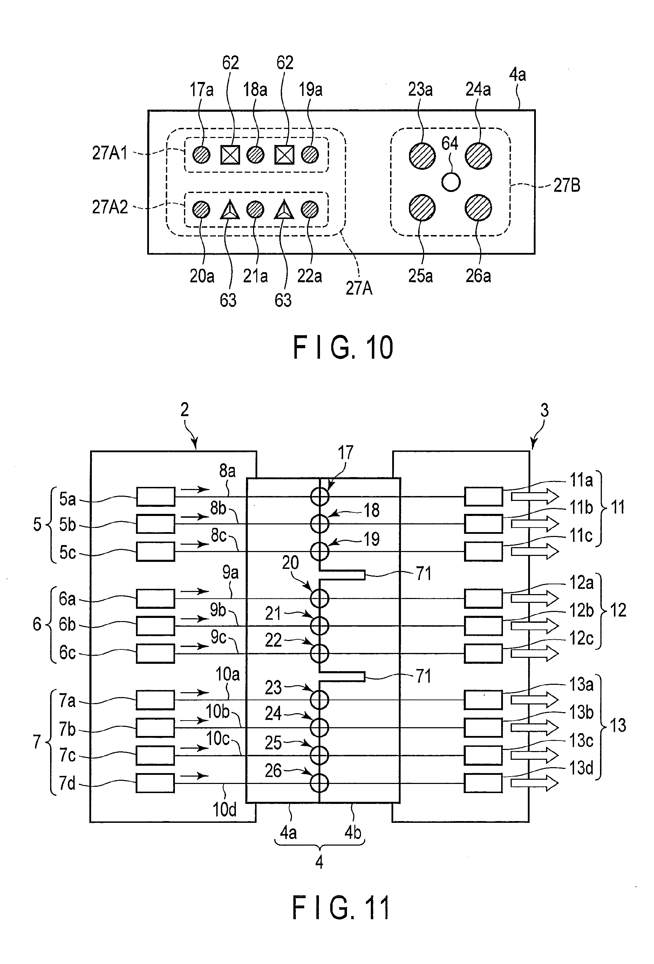

Now, a fifth embodiment of the present invention is described with reference to FIG. 9 and FIG. 10. The light source device according to the present embodiment is basically similar in configuration to the light source device 1 according to the first embodiment (see FIG. 1 to FIG. 4). The same parts in FIG. 6 and FIG. 7 as the parts in FIG. 1 to FIG. 4 are denoted by the same reference signs, and are not described. The differences are only described here.

The present embodiment is different from the other embodiments in that a wrong connection preventing mechanism 61 is provided so that the ports belonging to different port groups are not connected even when the first connector portion 4a of the light source unit 2 of the light source device 1 according to the first embodiment is wrongly connected to the second connector portion 4b of the illumination unit 3.

The wrong connection preventing mechanism 61 has fitting depressions 62, 63, and 64 respectively provided in the A-group 27A1, the B-group 27A2, and the second group 27B which are the port groups disposed on the connection surface of the first connector portion 4a. Here, the fitting depressions 62 of the A-group 27A1, the fitting depressions 63 of the B-group 27A2, and the fitting depressions 64 of the second group 27B are different in shape from one another.

Furthermore, on the connection surface of the second connector portion 4b, protrusions 65, 66, and 67 that can be fitted into the fitting depressions 62, 63, and 64 are provided at positions respectively corresponding to the fitting depressions 62, 63, and 64 of the first connector portion 4a.

In the configuration described above, when the connection surface of the first connector portion 4a and the connection surface of the second connector portion 4b are located at correct positions during the connection between the first connector portion 4a of the light source unit 2 and the second connector portion 4b of the illumination unit 3, the protrusions 65, 66, and 67 of the second connector portion 4b are properly fitted into the fitting depressions 62, 63, and 64 of the first connector portion 4a. Thus, in this case, the first connector portion 4a of the light source unit 2 is correctly connected to the second connector portion 4b of the illumination unit 3.

In contrast, in a wrong connection condition in which the connection state (e.g., connection direction, direction, or insertion depth) of the connection portion 4 including the first connector portion 4a of the light source unit 2 and the second connector portion 4b of the illumination unit 3 is not proper, the fitting depressions 62, 63, and 64 and the protrusions 65, 66, and 67 that are different in shape face each other. Therefore, in this case, the protrusions 65, 66, and 67 of the second connector portion 4b are not properly fitted into the fitting depressions 62, 63, and 64 of the first connector portion 4a, and the ports are not connected. Accordingly, the depressions and the protrusions serving as the wrong connection preventing mechanism 61 prevent the connection of the ports belonging to different groups.

According to this configuration, the mutual connection of the ports belonging to different groups can be prevented even when the connection surface of the first connector portion 4a and the connection surface of the second connector portion 4b are not located in the correct positions.

The wrong connection preventing mechanism 61 is not limited to the configuration in which the shapes of the depressions and the protrusions vary according to the port groups, and may have a configuration in which the positions of the depressions and the protrusions relative to the ports vary according to the port groups.

A large inter-port-group distance may be set between the A-group 27A1, the B-group 27A2, and the second group 27B that are disposed on the connection surfaces of the connection portion 4 including the first connector portion 4a of the light source unit 2 and the second connector portion 4b of the illumination unit 3, so that the distance between the ports belonging to different groups is greater than the distance between the ports belonging to the same group. In this case, even if the connection of the ports is prevented by the depressions and the protrusions because of the wrong connection of the connection portion, the connection of the ports belonging to different groups can be prevented by the prevention of the wrong connection resulting from stray light.

### [Modifications]

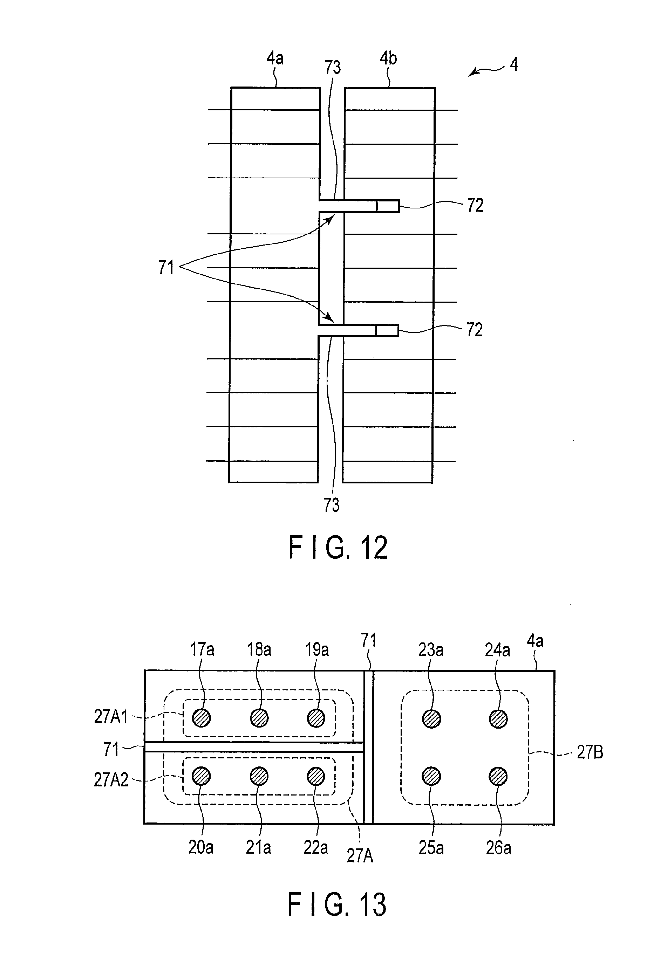

Here, a first modification of the light source device 1 according to the first embodiment (see FIG. 1 to FIG. 4) is described with reference to FIG. 11 and FIG. 13. In the present modification, partitions 71 which prevent stray light are disposed between the A-group 27A1, the B-group 27A2, and the second group 27B that are disposed on the connection surfaces of the connection portion 4 including the first connector portion 4a of the light source unit 2 and the second connector portion 4b of the illumination unit 3. As shown in FIG. 12, the partitions 71 include depressions 72 formed parallel to the extending direction of the optical fiber in the connection surface of the second connector portion 4b of the illumination unit 3, and protrusions 73 formed in the connection surface of the first connector portion 4a of the light source unit 2.

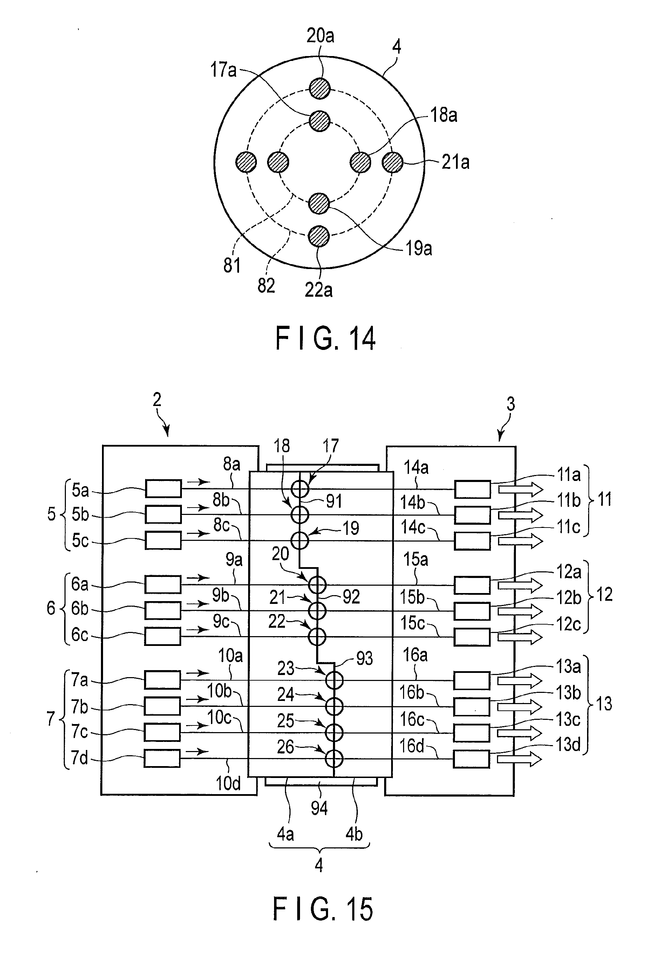

Now, a second modification of the light source device 1 according to the first embodiment (see FIG. 1 to FIG. 4) is described with reference to FIG. 14. In the present modification, the connection portion 4 including the first connector portion 4a of the light source unit 2 and the second connector portion 4b of the illumination unit 3 is cylindrical. Here, the ports 17a, 18a, and 19a belonging to the A-group 27A1 of the first hierarchical port group disposed on the connection surface of the connection portion 4 of the first connector portion 4a are concentrically arranged on a first reference circle 81. The ports 20a, 21a, and 22a belonging to the B-group 27A2 of the first hierarchical port group are concentrically arranged on a second reference circle 82 which is different in diameter from the first reference circle 81.

Thus, even if the connection portion 4 including the first connector portion 4a of the light source unit 2 and the second connector portion 4b of the illumination unit 3 is connected out of position in a rotation direction, the connection of the ports belonging to different groups can be prevented.

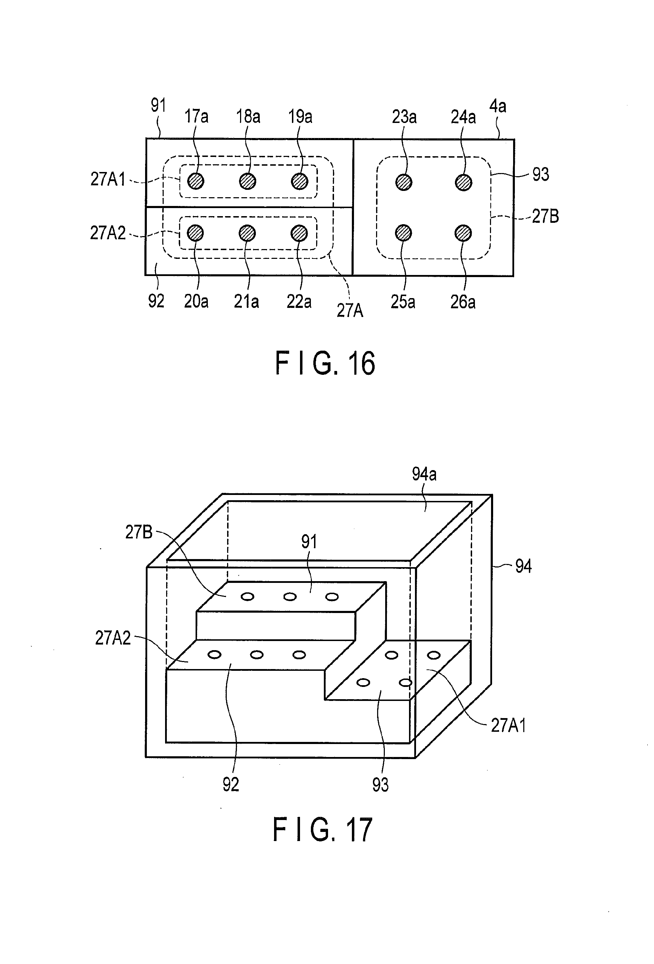

Now, a third modification of the light source device 1 according to the first embodiment (see FIG. 1 to FIG. 4) is described with reference to FIG. 15 and FIG. 16. In the present modification, the connection surfaces of the connection portion 4 including the first connector portion 4a of the light source unit 2 and the second connector portion 4b of the illumination unit 3 are configured to be stepped so that the A-group 27A1, the B-group 27A2, and the second group 27B that are disposed are located at positions different in an insertion direction during connection. Here, as shown in FIG. 15, a connection surface 91 of the A-group 27A1, a connection surface 92 of the B-group 27A2, and a connection surface 93 of the second group 27B of the first connector portion 4a are arranged so that these connection surfaces are stepped at positions different in the insertion direction during connection.

In the configuration according to the present embodiment, when the connection portion 4 including the first connector portion 4a of the light source unit 2 and the second connector portion 4b of the illumination unit 3 is connected in a wrong direction, the connection surfaces 91 to 93 of the respective port groups do not contact, and the connection of the ports belonging to different groups can be prevented.

Now, a fourth modification of the light source device 1 according to the first embodiment (see FIG. 1 to FIG. 4) is described with reference to FIG. 17. In the present modification, the second group 27B is disposed in the tallest connection surface 91 which is the surface closest to an opening 94a of a sleeve 94 of the first connector portion 4a of the light source unit 2. In this case, there is a stronger possibility that the emitted light may be emitted (leaked) to the outside from the connection surface 91 which is closest to the opening 94a of the sleeve 94 of the first connector portion 4a of the light source unit 2 than from the other connection surfaces 92 and 93. Therefore, safety can be higher if the second group 27B which transfers and receives safer light (e.g., LED light) is disposed in the connection surface 91 which is closest to the opening 94a of the sleeve 94 of the first connector portion 4a of the light source unit 2.

### [Others, Preferred Modifications]

Although the hierarchy of the laser light port goes no further than the second hierarchical layer in the examples shown in the embodiments described above, the present invention is not limited to this. For example, the hierarchy of the laser light ports can have a hierarchical structure based on the physical properties such as an intensity of light energy to be transferred and received (the maximum output of the primary light source), a light emitting mode (a single mode or a multimode), and a peak wavelength. The same also applies to the hierarchy of the non-laser light ports. For example, the hierarchy of the non-laser light ports can have a hierarchical structure of light source types (e.g., LED, lamp, SLD), wavelengths (e.g., white light, a predetermined wavelength, a spectral line width), and the maximum outputs. For example, as shown in FIG. 4, the B-group 27A2 as the second hierarchical layer can be further grouped into a B1-group 27A21 and a B2-group 27A22 as a third hierarchical layer so that the second primary light source 6a and the second primary light sources 6b and 6c of the light source unit 2 emit different intensities of laser light.

The same also applies to the hierarchy of the electric ports. For example, it is possible to provide a hierarchy of electric supply lines and signal lines, a digital/analog hierarchy, a hierarchy of the levels of flowing current amounts, and a unidirectional/bidirectional hierarchy. For example, as shown in FIG. 5, the first hierarchical port group (second group 31) can be grouped into an electric supply port group 31A in which electric supply ports and ground level ports are common, respectively, and a detection signal port group 31B which transfers and receives detection signal energy detected by a sensor mounted in at least one of the light source unit 2 and the illumination unit 3. Alternatively, the first hierarchical port group (second group 31) may be grouped into a digital signal port group 31A which transfers and receives digital signals, and an analog signal port group 31B which transfers and receives analog signals. Such a second hierarchical group can be further grouped into third hierarchical port groups (a group 31B1 and a group 31B2) by physical properties such as current levels, voltage levels, and noise resistance of electric energy to be transferred and received.

Furthermore, although the connection portion 4 including the first connector portion 4a of the light source unit 2 and the second connector portion 4b of the illumination unit 3 is in a one-piece form in the examples shown in the embodiments described above, the present invention is not limited to this. An independent connection portion may be provided for each port group. Port groups may be independent from one another. In this case, it is preferable that the port groups are closely located in a collective area on the side of the light source unit 2.

Moreover, the connection portion 4 can be separated into an electric connection portion and a light connection portion. In this way, the structure of the connection portion 4 can be optimized for electricity and light. In particular, the connection portion for the laser light ports only separates the laser light ports, and can be an independent connector. Thus, this connector can be exclusive to laser, and proper countermeasures (e.g., connection check, leakage light prevention, and a shutter) can be easily provided.

The number of the primary light sources of the light source unit 2 can be smaller than the number of the ports of the connection portion 4. In this case, there are also ports that are not connected to on the side of the light source unit. For example, a light source unit 2 having no unnecessary primary light sources is prepared to combine with the illumination unit 3 having ports that are not connected to as shown in the third embodiment (see FIG. 6 and FIG. 7). This allows the user to purchase the light source unit 2 at a lower cost.

Although the primary light sources of the light source unit 2 are connected one to one up to the ports on the side of the light source unit 2 in the illustrated examples, the present invention is not limited to this. For example, it is possible to connect one light source unit 2 to the ports belonging to the same port group by using, for example, a branched optical element.

Furthermore, it is also possible to group by the characteristics of the ports of the connection portion 4. For example, optical fibers for laser light can be grouped by core diameters, NA, and the materials of the cores. The specifications of these optical fibers are selected by physical properties such as a maximum light intensity, an emission angle, and a wavelength which are the physical properties of light energy to be optically connected to the light converting member from the primary light source.

Moreover, the present invention is not limited to the embodiments described above, and it is obvious that various modifications can be made without departing from the spirit of the invention.

## Claims

1. A light source device comprising: a light source unit (2) including a primary light source; an illumination unit (3) including a light converting member which converts primary light emitted from the primary light source to secondary light and emits the secondary light to an outside; and a connection portion (4) which removably connects the light source unit and the illumination unit,
**characterized in that** the connection portion includes multiple ports configured to transfer and receive energy between the light source unit and the illumination unit, and
the multiple ports are grouped into multiple first hierarchical port groups (27A, 27B; 27A, 31; 27A, 51) by physical properties of the energy to be transferred and received by the ports.

2. The light source device according to claim 1, **characterized in that** at least one of the first hierarchical port groups is a light port group (27A; 27B) which transfers and receives light energy.

3. The light source device according to claim 2, **characterized in that** the ports belonging to the light port group are grouped into multiple second hierarchical port groups (27A1; 27A2) by physical properties of the light energy to be transferred and received.

4. The light source device according to claim 3, **characterized in that** at least one of the second hierarchical port groups is a laser light port group (27A1) which transfers and receives laser light,
the primary light source is a laser light source (5a, 5b, 5c, 6a, 6b, 6c) which emits laser light, and
the light converting member is a laser light converting member (11a, 11b, 11c, 12a, 12b, 12c) configured to convert the laser light.

5. The light source device according to claim 3, **characterized in that** at least one of the second hierarchical port groups is a non-laser light port group (27A2) which transfers and receives non-laser light,
the primary light source is a non-laser light source (7a, 7b, 7c, 7d) which emits non-laser light, and
the light converting member is a non-laser light converting member (13a, 13b, 13c, 13d) configured to convert the non-laser light.

6. The light source device according to claim 5, **characterized in that** the non-laser light source is an LED light source which emits LED light, and
the light converting member is an LED light converting member configured to convert the LED light.

7. The light source device according to claim 3, **characterized in that** the ports belonging to the multiple second hierarchical port groups are grouped into multiple third hierarchical port groups (27A21, 27A22) by at least one of physical properties of light energy to be transferred and received and a kind of the primary light source.

8. The light source device according to claim 1, **characterized in that** at least one of the first hierarchical port groups is an electric port group (31) which transfers and receives electric energy.

9. The light source device according to claim 8, **characterized in that** the ports belonging to the electric port group are grouped into multiple second hierarchical port groups (31A, 31B) by electric properties of electric energy to be transferred and received by the ports.

10. The light source device according to claim 9, **characterized in that** at least one of the second hierarchical port groups is an electric supply port group (31A) in which electric supply ports and ground level ports are common, respectively.

11. The light source device according to claim 9, **characterized in that** at least one of the second hierarchical port groups is a detection signal port group (31B) which transfers and receives detection signal energy detected by a sensor mounted in at least one of the light source unit and the illumination unit.

12. The light source device according to claim 9, **characterized in that** at least one of the second hierarchical port groups is a digital signal port group (31A) which transfers and receives digital signals.

13. The light source device according to claim 9, **characterized in that** the ports belonging to the second hierarchical port groups are grouped into multiple third hierarchical port groups (31B1, 31B2) by physical properties including current levels, voltage levels, and noise resistance of electric energy to be transferred and received.

14. The light source device according to claim 1, **characterized in that** the ports arranged in the connection portion are closely located for each of the'grouped hierarchical port groups.

15. The light source device according to claim 14, **characterized in that** the connection portion collectively operates, for each of the port groups, a countermeasure mechanism required by physical properties of energy to be transferred and received by each of the ports.

16. The light source device according to claim 15, **characterized in that** the countermeasure mechanism is a laser safety measure mechanism to assure safety of the laser light port group from laser light.

17. The light source device according to claim 16, **characterized in that** the laser light safety measure mechanism is a shutter which prevents the leakage of laser light to the outside.

18. The light source device according to claim 1, **characterized in that** the first hierarchical port group is configured to locate at least one of a non-port group having no ports belonging thereto and a one-port group having only one port.

19. The light source device according to claim 3 or 9, **characterized in that** the second hierarchical port group is configured to locate at least one of a non-port group having no ports belonging thereto and a one-port group having only one port.

20. The light source device according to claim 3 or 9, **characterized in that** the ports belonging to the second hierarchical port groups are prioritized by the positions thereof.

21. The light source device according to claim 3, **characterized in that** a light blocking member (46) is provided in an unused port of the second hierarchical port groups on the side of the illumination unit.

22. The light source device according to claim 1, **characterized in that** at least one of the first hierarchical port groups is a free port group (51) which is not limited in energy to be transferred and received by each port belonging to the port group and to which any port is allowed to belong.

23. The light source device according to claim 1, **characterized in that** the first hierarchical port group includes a wrong connection preventing mechanism (61) which prevents the mutual connection of the ports belonging to different port groups.
